# EUROPEAN PATENT APPLICATION

(11) **EP 1 009 126 A1**
(43) Date of publication of application: **14.06.2000**
(21) Application number: 98204136.0
(22) Date of filing: 08.12.1998
(51) Int. Cl.: H04L 9/32, H04N 1/32

(54) **Device for generating a descrambling signal**

(71) Applicant: Mindport B.V., 2130 KA Hoofddorp (NL)
(72) Inventor: Wajs, Andrew Augustine, 2023 AA Haarlem (NL)
(74) Representative: de Vries, Johannes Hendrik Fokke

(57) **Abstract**

A device for generating a descrambling signal comprises a first generator providing a descrambling base signal, a second generator providing a watermark signal, and means for combining the descrambling base signal and the watermark signal into a descrambling signal. The watermark signal generated by the second generator includes a device identification.

## Description

The invention relates to a device for generating a descrambling signal.

Such a device is used in a descrambling system for descrambling a scrambled content or information signal. When the content is descrambled the clear content could be used by unauthorized persons, i.e. a pirate, for distribution or other unauthorized commercial purposes. With conventional systems for descrambling a scrambled content, it is generally impossible to trace the descrambling system or descrambling signal generating device which is used to obtain the content distributed by an unauthorized person.

The invention aims to provide a device of the above-mentioned type, wherein it is relatively easy to trace the descrambling system or descrambling signal generating device used to obtain a clear content, by means of this clear content.

To this end the device of the invention comprises a first generator providing a descrambling base signal, a second generator providing a watermark signal, and means for combining the descrambling base signal and the watermark signal into a descrambling signal, wherein the watermark signal generated by the second generator includes a device identification.

In this manner a device is obtained, wherein the descrambling signal contains a watermark signal including a device identification. This device identification will be added to the clear content during the descrambling operation and in this manner the device can be traced by analysing the clear watermarked content.

The invention will be further explained by reference to a drawing showing a descrambling system equipped with an embodiment of the device of the invention.

In the following description an embodiment of a device for generating a descrambling signal will be described as used in a descrambling system described in a co-pending patent application of the same applicant. However it is noted that the present device for generating a descrambling signal is not restricted to a device for use in such a descrambling system.

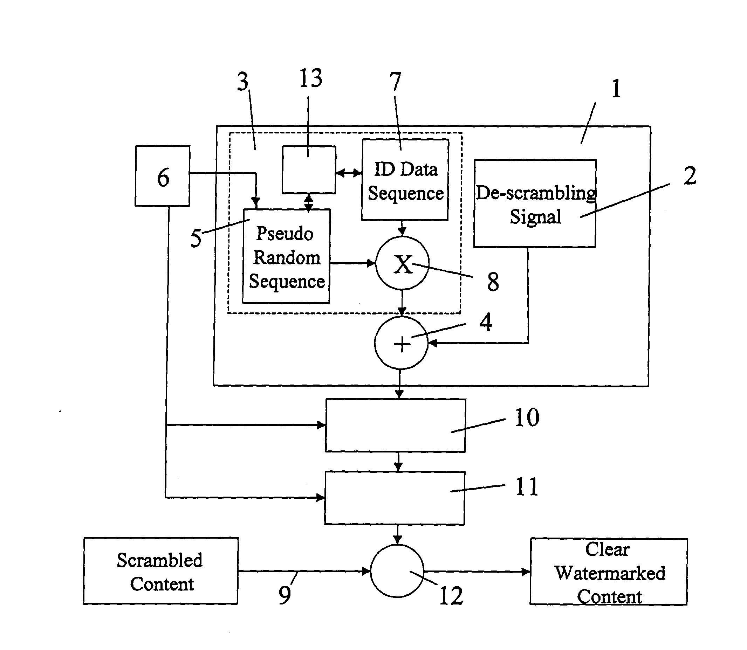

The descrambling system shown in the drawing is provided with a device for generating a descrambling signal which is preferably part of a secure device 1, such as a smart card. The descrambling signal generating device comprises a first generator 2 providing a descrambling base signal and a second generator 3 providing a watermark signal, wherein the descrambling base signal and the watermark signal are combined in an adder 4. The adder 4 provides the descrambling signal used in the descrambling system which will be described hereinafter. It is noted that the term descrambling base signal is used to refer to any conventional descrambling signal.

In the preferred embodiment, the second generator 3 comprises a pseudo random sequence generator 5 seeded by a key received from a control unit 6 of the descrambling system. The second generator 3 further comprises a device identification sequence source 7, which can be made as a memory. The identification sequence is modulated on the pseudo random sequence provided by the generator 5 by means of an exclusive or operation 8. The bit rate of the pseudo random sequence is much higher than the bit rate of the identification sequence, so that the output of the exclusive or operation 8 has a bandwith corresponding with the bit rate of the pseudo random sequence. The output of the exclusive or operation 8 is the watermark signal which is added to the descrambling signal.

The output of the adder 4 is the descrambling signal which is used to descramble the scrambled input received on an input 9. As this scrambled input has been compressed and decompressed, an equalizer or compensation filter 10 is provided to replicate the impulse response of the transfer function of this compression and decompression steps. The equalizer 10 is adjusted by the control unit 6 to provide the correct impulse response. This is further described in the above-mentioned co-pending application. Further the output of the equalizer 10 is processed by a processor 11 in such a manner that the entropy distribution of the descrambling signal corresponds to the entropy distribution of the original scrambling signal and clear content. The processor 11 is also adjuted by the control unit 6. It is noted that information on the required settings can be received by the control unit 6 from an outside source as part of an entitlement or other control file, for example. This file can be forwarded as a separate data stream or can be inserted into the scrambled information data stream. By combining the scrambled content and the processed descrambling signal in a descrambler 12 a clear watermarked content is obtained. The decrambling system is not a part of the present invention and is described in the co-pending application which is deemed to be incorporated here by reference.

If the descrambling signal generating device is used by a pirate to obtain the clear content, this clear content will be watermarked with the device identification sequence. By analysing the content provided by the pirate, the watermark signal can be detected and in this manner the secure device 1 used by the pirate can be traced. Thereafter, the secure device can be made useless, for example by no longer using the private key of the secure device 1 for encrypting the files containing information necessary for operating the descrambling system, such as an entitlement file, the key for seeding the first generator 1 and the key for seeding the generator 5.

In order to prevent removal of the device identification sequence by combining the descrambling signals obtained from two or more descrambling signal generating devices, a processor 13 of the secure device 1 is programmed such that the phase relationship between the pseudo random sequence provided by the generator 5 and the device identification sequence provided by the source 7 is randomly selected. This means that there is no fixed relationship between these two sequences if the output signals of two or more of the devices as described are combined. Averaging the output signals will then not result in a removal of the device identification sequences.

As an alternative, the processor 13 can control the exclusive or operation 8 on the device identification sequence and the pseudo random sequence such, that the device identification sequence is repetitively modulated on the pseudo random sequence, wherein at each repetition the processor 13 checks a next bit of the identification sequence and inverts all bits of the identification sequence if this checked bit has a given logic value, i.e. either a zero or a one. This means that if at the first repetition the first bit is a logic one for example, all bits are inverted. For the second repetition, the second bit is checked and if it is logic one, then the entire identification sequence is inverted, etc. Again averaging of the descrambling signals generated by the device described will not lead to removal of the device identification sequences.

If it is found that a device is used by a pirate to descramble a scrambled content for unauthorized commercial purposes, for example distribution on the internet, the provider of the descrambling signal devices, i.e. the secure devices, can trace the or each secure device used in an easy manner. For, the authorized person knows the pseudo random sequence generator used in the devices 1. By synchronising the pseudo random sequence with the watermarked content signal, the device identification sequence can be found. The manner for synchronisation corresponds with synchronisation in a spread spectrum system. Therefore, this synchronisation and detection of the watermark signal is not further described.

In case of a device as described using random selection of the phase relationship between the pseudo random sequence and the device identification sequence, it can easily be established from the symbol rate of the watermark signal how many sequences have been averaged. For, the data rate of the device identification sequence is known to the authorized provider. If for example two identification sequences are contained in the watermarked content, it is possible to "de-multiplex" the two device identification sequences by selecting every second symbol detected for each identification sequence. Of course, first the "multiplex" of the two identification sequences is detected by synchronising the known pseudo random sequence with the watermarked clear content.

In case of devices using repeated insertion of the identification sequence into the pseudo random sequence with inversion of the bits depending on the bit value of each next bit, the identification sequences of the devices used to average out the watermark signals can be derived from the detected sequences hidden in the content. Assume for example that two devices have been used by the pirate having the identification sequences 101 and 110 and that these sequences are inserted four times with inversion of the bits as described. This means that the first device will have generated 101, 010, 101, 010, while the second device will have generated 110, 001, 001 and 110. Despite averaging these sequences, detection will provide the sequences 1xx, 0xx, x01, x10, wherein a "1" or a "0" occurs when there is coincidence of the same value and a "x" denotes an undetected symbol due to averaging out. As the provider knows the repetition and inversion scheme used, the detected sequences learn that the both sequences start with a value 1, as the first detected sequence starts with a value 1. Further, the second and third symbols of the sequences are not equal to each other. The second sequence provides no further information and the third sequence learns that the second symbol of only one identification sequence changed, so that we have 11x and 10x. The fourth detected sequence learns that the third symbol of at least one identification sequence changed again. If we assume one identification sequnce to be 101, this automatically provides 110 for the other.

It is noted that the above-described devices for adding a watermark signal with random phase relationship or repeated insertion of the watermark signal can be used in combination with any type of descrambling signal generator or even separate from a descrambling signal generator.

A pirate could try to prevent watermark signal detection by slightly changing the bit rate of the content. As the provider knows the original bit rate of the content this type of distortion of the content to prevent watermark signal detection can be removed by comparing the bit rates of the original and pirate contents. The provider can then change the bit rate of the pirate content back to the original one and can then start one of the described detection schemes.

A further or other type of protection against unauthorized use by pirates can be obtained by using the processor 13 of the secure device 1 to add a compression hindering signal to the output of the generator 2. This compression hindering signal will then be part of the descrambling signal used by the descrambler 12 and will be inserted in this manner into the clear content on the output. The compression hindering signal for example inserts noise into the information signal which will not affect the quality of the information signal. It will however significantly affect any compression algorithm to effectively compress the information signal, so that a pirate will not be able to effectively recompress the clear content for distribution purposes. If the compression hindering signal is used independent of a descrambling signal generator, the compression hindering signal will be added to the clear content in a suitable manner.

The invention is not restricted to the above described embodiment which can be varied in a number of ways within the scope of the claims.

## Claims

1. Device for generating a descrambling signal, comprising a first generator providing a descrambling base signal, a second generator providing a watermark signal, and means for combining the descrambling base signal and the watermark signal into a descrambling signal, wherein the watermark signal generated by the second generator includes a device identification.

2. Device according to claim 1, wherein the watermark signal generator comprises a pseudo random sequence generator seeded by a key, a device identification sequence source, and a modulator, wherein the device identification sequence provided is modulated on the pseudo random sequence to obtain the watermark signal.

3. Device according to claim 2, wherein the modulator provides an exclusive or operation on the device identification sequence and the pseudo random sequence, wherein preferably the bit rate of the pseudo random sequence is much higher than the bit rate of the device identification sequence.

4. Device according to claim 2 or 3, wherein the key delivered to the pseudo random sequence generator is received from an outside source.

5. Device according to any one of the preceding claims, comprising a generator for generating a compressing hindering signal and means for inserting the hindering signal into the descrambling signal.

6. Device according to any one of the preceding claims, comprising a pseudo random sequence generator, a device identification sequence source, and a modulator, wherein the device identification sequence provided is modulated on the pseudo random sequence to obtain the watermark signal, wherein the phase relationship between the pseudo random sequence and the device identification sequence is randomly selected.

7. Device according to any one of claims 1-5, comprising, a pseudo random sequence generator, a device identification sequence source, and a modulator, wherein the device identification sequence provided is modulated on the pseudo random sequence to obtain the watermark signal, wherein the device identification sequence is repetitively modulated on the pseudo random sequence, wherein at each repetition a control unit checks a next bit of the device identification sequence and inverts the bits of the device identification sequence if this bit has a given logic value.

8. Device for generating a watermark signal, comprising a pseudo random sequence generator, a device identification sequence source, and a modulator, wherein the device identification sequence provided is modulated on the pseudo random sequence to obtain the watermark signal, wherein the phase relationship between the pseudo random sequence and the device identification sequence is randomly selected.

9. Device for generating a watermark signal, comprising a pseudo random sequence generator, a device identification sequence source, and a modulator, wherein the device identification sequence provided is modulated on the pseudo random sequence to obtain the watermark signal, wherein the device identification sequence is repetitively modulated on the pseudo random sequence, wherein at each repetition a control unit checks a next bit of the device identification sequence and inverts the bits of the device identification sequence if this bit has a given logic value.

10. Device according to any one of the preceding claims, wherein the device is implemented in a secure device, such as a smart card.

11. System to detect a watermark signal hidden in an information signal, comprising a pseudo random signal generator, means for synchronising the pseudo random signal generator and the information signal, means for detecting a data sequence hidden in the information signal and for determining the number (n) of watermark signals in the hidden data sequence and means for selecting every n^{th} bit from the detected hidden data sequence as bits of one of the n watermark signals.

12. System according to claim 11, wherein said means for determining the number (n) of watermark signals comprises means for detecting the bit rate of the hidden data sequence and comparing the detected bit rate with the known bit rate of one watermark signal.
